(19) Europäisches Patentamt
European Patent Office
Office européen des brevets

(11) **EP 3 988 970 A1**

(12) **EUROPEAN PATENT APPLICATION**

(43) Date of publication:
**27.04.2022 Bulletin 2022/17**

(21) Application number: **20382913.0**

(22) Date of filing: **20.10.2020**

(51) International Patent Classification (IPC):
**G02B 1/00** (2006.01)   **B82Y 20/00** (2011.01)
**B82Y 40/00** (2011.01)   **C08K 3/011** (2018.01)
**G02B 5/00** (2006.01)

(52) Cooperative Patent Classification (CPC):
**G02B 5/008; G02B 1/002;** B82Y 20/00;
C08K 2003/0831; G01N 21/45

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Consejo Superior de Investigaciones Científicas (CSIC)**
**28006 Madrid (ES)**
• **Consorcio Centro de Investigación Biomédica en Red**
**M.P.**
**28029 Madrid (ES)**
• **Institució Catalana De Recerca I Estudis Avançats (ICREA)**
**08010 Barcelona (ES)**

• **Fundació Institut Català de Nanociència i Nanotecnologia (ICN2)**
**08193 Cerdanyola del Vallès (Barcelona) (ES)**

(72) Inventors:
• **ALVAREZ SANCHEZ, MARIA MAR**
**08193 Cerdanyola del Vallès (Barcelona) (ES)**
• **VILLA SANZ, Rosa**
**08193 Cerdanyola del Vallès (Barcelona) (ES)**
• **GÜELL I GRAU, Pau**
**28029 28029 (ES)**
• **SEPULVEDA MARTINEZ, Borja**
**08193 Cerdanyola del Vallès (Barcelona) (ES)**
• **NOGUES SANMIGUEL, Josep**
**08010 Barcelona (ES)**

(74) Representative: **Pons**
**Glorieta Rubén Darío 4**
**28010 Madrid (ES)**

(54) **A STRETCHABLE OPTO-MECHANICAL MATERIAL COMPOSED BY A METALLIC AND OR DIELECTRIC NANOSTRUCTURE ARRAY EMBEDDED INTO A WRINKLED ELASTOMER**

(57) The invention relates to a material with opto-mechanical behaviour characterized in that it comprises a cured elastomeric material layer with a corrugated surface, forming wrinkles in the form of ridges and valleys, and a plurality of metallic, dielectric or dielectric-metal coated nanostructures, embedded in the elastomeric material, that generate a Fabry-Perot elastic cavity enhanced by plasmons and or dielectric resonances, and modulated by the wrinkled surface; and a process to obtain it and its uses. Therefore, the present invention can be placed in the area of materials comprising plasmonic metamaterials and their applications.

Fig. 5

EP 3 988 970 A1

**Description**

The invention relates to a material with opto-mechanical behaviour characterized in that it comprises a cured elastomeric material layer with a corrugated surface, forming wrinkles in the form of ridges and valleys, and a plurality of metallic, dielectric or dielectric-metal coated nanostructures, embedded in the elastomeric material, that generate a Fabry-Perot elastic cavity enhanced by plasmons and or dielectric resonances, and modulated by the wrinkled surface; and a process to obtain it and its uses. Therefore, the present invention can be placed in the area of materials comprising plasmonic metamaterials and their applications.

**BACKGROUND ART**

During the last decade, the development of flexible and stretchable devices has enormously expanded. Flexible electronics is already a mature field with significant applications as wearable devices or in-situ health diagnosis. The integration of optical structures into foldable or stretchable devices can drastically expand the range of potential applications. For example, the development of foldable photonic systems (i.e. optical structures with high robustness to bending and twisting) has been encouraged by the demand of flexible displays. However, the development of stretchable photonics systems has been hampered by the difficulty to achieve robust and controlled integration of the optical elements into soft elastomeric matrices.

Two different approaches can be distinguished in the field of stretchable photonics. On the one hand, optical structures that operate in harsh mechanical conditions conserving their optical features (such as stretchable LEDs and optical waveguides) are interesting for flexible electronics and displays. On the other hand, devices whose optical properties can be reversibly tuned by the application of a mechanical strain are appealing for applications in sensing, imaging and communications. In this context, stretchable optical fibres have shown the capacity to withstand large deformations and to provide reversible and sensitive light transmission changes under mechanical deformations. However, they are limited by the need of optical interconnections and do not allow direct visualization of the strain distribution on a surface. On the other hand, photonic and plasmonic micro/nanostructures are interesting alternatives since they can also provide spectral responses to mechanical actuation (i.e., mechanochromism). Mechanochromic materials are usually based on photonic gratings or plasmonic nanoparticle arrays. Their colour change induced by mechanical deformation allows both opto-mechanical tunability and 2D mapping of the strain in the material. Photonic gratings can be very sensitive, but they usually require highly reflective substrates to work in the reflection mode and show high angular dependence, which complicates their incorporation into functional devices.

In contrast, plasmonic-based stretchable materials generally present angle-independence and high optical signal. However, their mechanical spectral tunability and sensitivity is lower and sometimes lack of a wide linear detection range. To overcome some of these limitations, the rational design of materials that present a combined photonic, dielectric resonances and plasmonic response to mechanical stimulation is currently being investigated to obtain the benefits of these types.

Nevertheless, there is a need to develop new stretchable optical devices with larger mechanical tunability, versatility and sensitivity, as well as to simplify their fabrication and improve the robust integration.

**SUMMARY OF THE INVENTION**

The present invention discloses a novel soft stretchable enhanced Fabry-Perot (FP) cavity. The FP cavity is composed of arrays of nanostructures, showing plasmonic and/or dielectric resonances, which are self-integrated into elastomeric films by a highly innovative self-swallowing process. The process that the inventors disclosed shows the spontaneous swallowing of a plurality of metallic, dielectric or dielectric-metal coated nanostructures into the elastomer matrix and the wrinkle formation. The opto-mechanical response, of the self-embedded arrays of nanostructures, provides theoretical and experimental demonstrations of the plasmonic enhanced and Fabry-Perot optical modes, together with the influence of the wrinkled elastomeric films surface, as polydimethylsiloxane (PDMS) surface.

A first aspect of the present invention related to a material with opto-mechanical behaviour characterized in that it comprises

- a cured elastomeric polymer layer with a thickness of 0.1 to 10 mm, wherein said layer has a first and a second surfaces, wherein the second surface is opposite to the first surface;
- a plurality of metallic, dielectric and/or dielectric-metal coated nanostructures, wherein said metallic nanostructures are embedded inside the cured elastomeric polymer at a depth of 0.3 $\mu$m to 3 $\mu$m from the first surface of the elastomeric polymer, wherein said nanostructures have a length of between 20 nm and 3000 nm and a thickness of between 1 nm and 3000 nm;

wherein said first surface is corrugated forming wrinkles in the form of ridges and valleys, and wherein the ridges wavelength is between 1 $\mu$m and 30 $\mu$m and the height of the ridges is between 0.5 $\mu$m and 5 $\mu$m.

The term "opto-mechanical behaviour" as used herein refers to any interaction between light and objects subjected to mechanical deformations that change the optical response of the object (change the interaction of the light with the object).

The term "nanostructure" as used herein refers to any structure with at least one dimension on the nanometre scale, between 0.1 nm and 3000 nm, and where such structures can take any shape. In the present invention nanostructures are, but are not limited to, nanoparticles, nanorods, nanodiscs, nanodomes, nanocylinders, nanowires, nanofibers, nanobelts, nanoribbons, nanosprings, nanocapsules, quantum dots, nanosheets, nanocomposites and nanotubes.

The term "wavelength or wrinkle wavelength" as used herein refers to the distance length between two consecutive ridges.

In a preferred embodiment of the material of the present invention the cured elastomeric material layer is selected from any polymer based in metal complexes assisted catalysis, preferably is selected from PDMS, polybutylene adipate terephthalate and silicone-based polymers.

In another preferred embodiment of the material, the metallic, dielectric and/or dielectric-metal coated nanostructures are selected from any metal with plasmonic response and capable to catalyse the polymeric reaction, wherein the metallic is selected from gold nanostructures, silver nanostructures, platinum nanostructures and transition metal; the dielectric is selected from silicon nanostructures and germanium structures; the dielectric cover with a gold film is selected from iron cover with a gold (Fe-Au) film, aluminium cover with a gold (Al-Au) film, nickel cover with a gold (Ni-Au) film nanostructures, cobalt cover with a gold (Co-Au) film nanostructures, germanium cover with gold (Ge-Au) film nanostructures, silicon cover with gold (Si-Au) film nanostructures and any combination thereof. In a further preferred embodiment of the material the metallic nanostructures are gold nanostructures. In another further preferred embodiment of the material the metallic nanostructures are silver nanostructures. In another further preferred embodiment of the material the dielectric-metal coated nanostructures are Si-Au nanostructures, which combines plasmonic and dielectric resonances.

In another preferred embodiment of the material of the present invention, the metallic, dielectric or dielectric-metal coated nanostructures are selected from nanoparticles, nanorods, nanodiscs, nanodomes, nanocylinders, nanowires, nanofibers, nanobelts, nanoribbons, nanosprings, nanocapsules, quantum dots, nanosheets, nanocomposites and nanotubes. In a more preferably embodiment, the metallic, dielectric or dielectric-metal coated nanostructures are a nanodomes.

The term "nanodome or nanodomes" as used herein refers to any structure that has a shape like a hemisphere and it is called nanodomes, as well as semi-shells, half-self, nanocups or nanocaps.

The metallic, dielectric or dielectric-metal coated nanodomes that are self-embedded within the polymer at a controlled penetration distance generate an elastic Fabry-Perot (FP) cavity enhanced by plasmons and or dielectric resonances. This elastic Fabry-Perot plasmon cavity has an optical response that is modulated by the plasmonic and or dielectric resonance interaction of the metallic and or dielectric nanostructures with the cavity and by the wrinkles generated on the surface of the cavity during the manufacturing process, since the FP-plasmon cavity signal is modulated by the wrinkled surface. The material (FP-plasmon or FP-dielectric resonance + wrinkles) reflectance peaks blue-shift and increase their intensity when reducing the cavity thickness and reducing the wrinkle size (i.e. when stretching or compressing the material). Thus, the optical cavity generates a series of resonances that depend on the depth of penetration of the nanoparticles into the polymer and that are highly sensitive to the stretching, compression or expansion of the material. This is the first interferometric Fabry-Perot elastic cavity. This cavity can withstand reversible elastic deformations of up to 30 % without damage. As the material deformation increases, a variation of the optical response of the cavity occurs: increase of the reflected intensity and change of the reflection peak towards lower wavelengths, due to the decrease of the thickness of the cavity. Then, this optical response is achievable by using assemblies (ordered or not) of metallic nanostructures with plasmonic response as Au, Ag, Pt, any transition metal cover by a gold film, at a controlled depth into the polymer. Arrays of high refractive index nanostructures (i.e. Si, Ge or other semiconductors) partially or totally covered by a gold layer can provide Fabry-Perot cavities enhanced by plasmonic and dielectric resonances. Using nanodomes as the nanostructure, wherein the material of said nanodomes are selected from previous material with plasmonic response the FP cavity is created in an easier way without the use of two different dielectrics or mirrors. Besides, the used nanodomes absorb light in the visible-near infrared (vis-NIR) range, transforming it into heat very efficiently. This property can be used to:

- cure the polymer in localized regions during the material fabrication
- tune the optical response of the final material (FP-plasmon with wrinkles). The heat generated by the nanodomes expands the polymer, changing the FP-cavity thickness and the height of the wrinkles.

A FP-cavity without wrinkles would only change the cavity resonance peaks of the spectral wavelength when changing the cavity thickness. Subsequently, the wrinkle surface modulates the intensity of the FP-plasmon resonances.

In another preferred embodiment of the material, the nanostructures are nanodomes, and wherein said metallic, dielectric or dielectric-metal coated nanodomes are selected from any metal with plasmonic response and capable to catalyse the polymeric reaction, preferably the metal is selected from gold nanodomes, silver nanodomes, platinum nanodomes, transition metal or dielectrics, cover with a gold film selected from iron cover with a gold (Fe-Au) film, aluminium cover with a gold (Al-Au) film, nickel cover with a gold (Ni-Au) film nanodomes, cobalt cover with a gold (Co-Au) film nanodomes, germanium cover with gold (Ge-Au) film nanodomes, silicon cover with gold (Si-Au) film nanodomes and any combination thereof. In a further preferred embodiment of the material the metallic nanodomes are gold nanodomes. In another further preferred embodiment of the material the metallic nanodomes are silver nanodomes. In another further preferred embodiment of the material the dielectric-metal coated nanodomes are Si-Au nanodomes, which combines plasmonic and dielectric resonances.

An enhancement of the sensitivity to mechanical strain in both the spectral wavelength and intensity of the reflectivity peaks arise from the combination of the coupled resonances between the FP cavity and the localized plasmon resonances of Au nanodomes, and the tunable reflection/refraction angles of the wrinkled surface. Therefore, the fact that nanodomes are made of gold has the following advantages:

- FP resonances occur across the spectrum (between ultraviolet (UV) and infrared (IR)), and the penetration depth of the nanostructures affects the position of the resonance peaks and the distance between peaks. Gold nanostructures primarily amplify resonances that appear in the 800-1000 nm range (but the smallest are also seen at 400-600 nm). Likewise, larger particles and larger penetrations will produce resonances towards higher values.
- the optical resonance is in the vis-NIR, which allows us to use light not near UV for measurements, as occurs with the silver nanodomes.
- the resonances are intense and localized.

In another preferred embodiment the metallic nanodomes are gold nanodomes, wherein said nanodomes are embedded inside the cured elastomeric polymer at a depth of between 0.6 $\mu$m and 0.8 $\mu$m, and wherein the ridges wavelength is between 13 $\mu$m and 15 $\mu$m. The optical performance enhances achieving that the reflection spectra presents three clear peaks, whose peaks positions and intensities experienced intense color changes (blue-shifts or red-shifts) and peaks intensity variations.

In another preferred embodiment of the material, the plurality of metallic, dielectric or dielectric-metal coated nanodome has a density range of embedded nanodomes into the elastomeric polymer with an occupancy factor of between 25% and 75%. It is measured by electron microscopy, in the micrographs of the manufacture of the sample with lower density of particles and with hexagonal packing, the values that come out are respectively of 25 and 75% and refer to the amount of area occupied by nanodomes with respect to the total.

A second aspect of the present invention related to a process to obtain the material of the present invention described above, characterized in that it comprises the following steps

> a) assembling of a metallic, dielectric or dielectric-metal coated nanostructures, on a solid support;
> b) pouring a mixture of an elastomeric material, preferably polydimethylsiloxane (PDMS), polybutylene adipate terephthalate and silicone-based polymers, and a curing agent onto the metallic-coated substrate obtained in step (a), and curing the obtained layers at a temperature of between 40 and 200 °C at least for a time of between 1 min and 2 h;
> c) cooling the product obtained in step (b) at a temperature of between 15 °C and 30 °C and liberating the wrinkled-surface elastomeric layer with the embedded nanostructures from the solid substrate.

The term "assembly" as used herein refers to the formation of a monolayer of ordered or randomly distributed nanostructures on a solid support (spontaneously formed or by using nanofabrication techniques (e.g. e-beam lithography).

The term "solid support" as used herein refers to any material wherein the ordered monolayer is deposited. In the present invention the solid support refers, but not limit, to any polymer film substrate, silicon substrate, glass substrate.

In a preferred embodiment of the process, the metal, dielectric or dielectric-metal of the nanostructures in step (a) is selected from gold, silver, platinum, iron covered with a gold (Fe-Au) film, aluminium covered with a gold (Al-Au) film, nickel covered with a gold (Ni-Au) film, cobalt covered with a gold (Co-Au) film, germanium covered with a gold (Ge-Au) film, silicon covered with a gold (Si-Au) film and any combination thereof. In a further embodiment the metal is gold.

In another preferred embodiment of the process, the elastomeric material is polydimethylsiloxane (PDMS).

In another preferred embodiment of the process, the elastomeric material is polydimethylsiloxane, and wherein the curing temperature of step (b) is between 130 °C and 150 °C, and preferably the external surface of the nanostructures in step (a) is gold and said nanostructure is a nanodome.

In a preferred embodiment of the process, wherein the assembling of step (a) is a colloidal self-assembling of polystyrene (PS) nanospheres on a solid substrate, preferably silicon substrate, and followed by drying and a reactive ion etching following by depositing a film of titanium with a thickness of between 1 nm and 5 nm, preferably 1 nm, over the ordered pattern nanospheres obtained in step (a), and followed by depositing a metallic film over the titanium film with a thickness of between 1 nm and 200 nm, preferably 40 nm. In a further preferred embodiment, the pouring of step (b) is a mixture between 5:1 and 20:1 of polydimethylsiloxane (PDMS) and a curing agent onto the metallic-coated silicon substrate obtained in step (a), and curing the obtained layers at a temperature of between 40 and 150 °C at least for a time of between 1 min and 2 h.

The term "colloidal self-assembly" as used herein refers to the spontaneous close-packed monolayer of spheres first formed at the air/water interface that is on the immersed silicon wafer. Once the monolayer is fully formed, the water is drained and the layer is deposited on the silicon substrate.

The term "reactive ion etching" as used herein refers to any technique to the isotropically etched the PS nanospheres. In the present invention it refers to a Reactive Ion Etching tool (or equipment) (*Oxford Instruments*), by using oxygen gas (100W, 80 mTorr, 30 sccm, 30 sec), obtaining an ordered pattern of nanospheres of 160 nm of diameter, but not limited to said technique.

The term "the ordered pattern nanospheres" as used herein refers to the special compact order that the PS nanospheres can reach after its colloidal self-assembly. In the present invention said ordered pattern nanospheres is a hexagonal close-packed structure, but not limited to said packed structure.

The term "deposited or deposition" as used herein refers to any technique related to deposit a layer or a thin layer of a material or sample on a substrate as for example, but not limited to, Electron Beam Physical Vapour Deposition, Spin coated, Chemical Vapor Deposition, Chemical solution deposition.

The term "curing" as used herein refers to any chemical process employed in polymer chemistry and process engineering that produces the toughening or hardening of a polymer material by cross-linking of polymer chains. Even if it is strongly associated with the production of thermosetting polymers, the term curing can be used for all the processes where starting from a liquid solution, a solid product is obtained. In the present invention curing method are for example, but not limited to, thermocuring, photocuring and photothermocuring.

During the temperature curing process of the elastomeric polymer, the external metallic, dielectric or dielectric-metal nanostructures capable to catalyse the polymeric reaction, acts as a catalyst to increase the crosslinking reaction speed, resulting in a local increase in stiffness (Young's modulus) in the region near the particles. This stiffness gradient generates mechanical stresses that cause the nanostructures to be embedded within the elastomeric polymer to a certain depth depending on the curing temperature. During this process, the difference between the Young's modulus of the polymer layer that has been in contact with the gold (more rigid), and the rest of the elastomeric polymer results in the generation of wrinkles on the surface. This was motivated by the fact that elastomeric polymer polymerization is based on a hydrosilylation reaction, which is catalyzed by transition metal complexes. Typical commercial curing agents include platinum complexes, but other transition metals (e.g., gold) can also behave as a catalyst and promote local cross-linking reactions. Therefore, the accelerated curing rate of the elastomer in contact to the metallic interfaces produces a mechanical stress that is sufficiently strong to overcome the adhesion forces between the nanostructures and the solid support, thereby swallowing the gold nanodomes inside the polymeric matrix. This enhanced curing reaction also generates a stiffer skin polymer layer, which is the responsible of forming the wrinkled pattern.

In another preferred embodiment of the process, the curing temperature of step (b) is between 130 °C and 150 °C.

In a further preferred embodiment of the process, the external surface of the nanostructures in step (a) is gold, the elastomeric polymer of step (b) is polydimethylsiloxane (PDMS) and the curing temperature of step (b) is between 130 °C and 150 °C.

Taking advantage of the photothermal capabilities of the plasmonic nanostructures, the polymer cure can also be performed in a localized manner using a laser, allowing the creation of small plasmonically amplified elastic Fabry-Perot cavities (determined by the size of the laser beam), forming patterns, and with arbitrary shapes quickly and without the need for masks. During laser curing, the temperature gradient generated between the centre and the edge of the beam produces a gradient in the size of the surface wrinkles produced and the depth at which the particles are embedded. This effect allows the creation of elastic and amplified FP cavities with different optical response along their size (beam diameter).

A third aspect of the present invention is the use of the material described above as active layer of a sensor.

In a preferred embodiment of the use, the sensor is a non-contact strain sensor, in which the mechanical stress to the material is converted into a spectral wavelength shift of the optical resonances, with at least a sensitivity of 2.5 $nm \cdot \%_S^{-1}$ and a reflectivity increase, with at least a sensitivity of 1.3 $\%_R \cdot \%_S^{-1}$.

In another preferred embodiment of the use, the sensor is a biosensor Fabry-Perot device. The refractive index change due to the biomolecular recognition at the surface generates a spectral wavelength shift of the optical resonances.

A fourth aspect of the present invention is the use of the material described above as a tuneable bandpass plasmonic waveguide filter. Only light of selected spectral wavelengths is transmitted through the material. These selections of spectral wavelengths can be tuned by applying mechanical stress to the material.

A fifth aspect of the present invention is the use of the material described above as part of a device to change light transmittance. Light transmission increases in all the spectra when mechanical stress is applied to the material due to the flattening of the wrinkles.

A sixth aspect of the present invention is a sensor comprising an active layer of the material described above.

In a preferred embodiment of the sensor, said sensor is a non-contact strain sensor.

In another preferred embodiment of the sensor, said sensor is a biosensor Fabry-Perot device.

A seventh aspect of the present invention is a tuneable band-pass plasmonic waveguide filter comprises of the material as described above.

An eighth aspect of the present invention is a device to change light transmittance comprises the material described above.

A ninth aspect of the present invention is a non-contact thermometer that changes the cavity thickness and the FP resonances with the temperature.

A tenth aspect of the present invention is a non-contact sound detector that detects the changes in the cavity thickness induced by sound waves.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples, drawings and sequence listing are provided by way of illustration and are not intended to be limiting of the present invention.

**BRIEF DESCRIPTION OF THE DRAWINGS**

**Fig. 1.** Schematic of the process for obtain the material of the present invention.

**Fig. 2.** Cross-section (Scanning electron microscopy) SEM image of the wrinkled-PDMS with swallowed Au-nanodomes. Scale bar = 2 $\mu$m

**Fig. 3.** Confocal microscopy image of the wrinkled PDMS surface. Scale bar = 20 $\mu$m

**Fig. 4.** Dependence of the nanodomes penetration depth and wrinkle wavelength on the curing temperature.

**Fig. 5.** Schematic of the self-swallowing process of the Au nanodomes due to the differential curing rate and generation of mechanical stress in the material.

**Fig. 6.** Gradient photothermal curing: temperature and wrinkle wavelength as a function to the distance to the laser spot.

**Fig. 7.** Confocal microscopy image of the photothermally cured sample. The discontinuous red arrow shows the inverse temperature gradient direction.

**Fig. 8.** Top-view SEM image of half-embedded gold nanodomes on photocurable silicone. Scale = 1 $\mu$m.

**Fig. 9.** Top-view SEM image of half-embedded aluminum nanodomes on PDMS. Scale = 1 $\mu$m.

**Fig. 10.** Opto-mechanical response in the reflection spectra as a function of the generated strain of the swallowed arrays of Au-nanodomes inside the PDMS cured at 140 °C.

**Fig. 11.** Opto-mechanical response in the reflection spectra as a function of the generated strain of the swallowed arrays of Au-nanodomes inside the PDMS cured at 100 °C.

**Fig. 12.** Opto-mechanical response in the reflection spectra as a function of the generated strain of the swallowed arrays of Au-nanodomes inside the PDMS cured at 60 °C.

**Fig. 13.** Experimental reflection spectra as a function of the strain the array of Au nanodomes transferred on the cured PDMS surface.

**Fig. 14.** Finite Difference Time Domain (FDTD) simulations and experimental measure of gold nanodome arrays transferred to a PDMS substrate.

**Fig. 15.** FDTD simulations of the opto-mechanical response of the Au-nanodome/FP cavity in the reflection spectra for increasing mechanical strain parallel to the sample surface.

**Fig. 16.** Wavelength sensitivity curve for compression and stretching of the material (applied pre-strain = 13.6%) for its 3 different resonances.

**Fig. 17.** Reflection intensity sensitivity curve for compression and stretching of the material (applied pre-strain = 13.6%) for its 3 different resonances.

**Fig. 18.** Wavelength values for the most intense optical resonance of the material for 100 cycles of stretching and compression.

**Fig. 19.** Reflection values for the most intense optical resonance of the material for 100 cycles of stretching and compression.

**Fig. 20.** Visible spectrum of the material after being heated with an infrared laser (A = 1064 nm) at different intensities.

## Examples

## Example 1

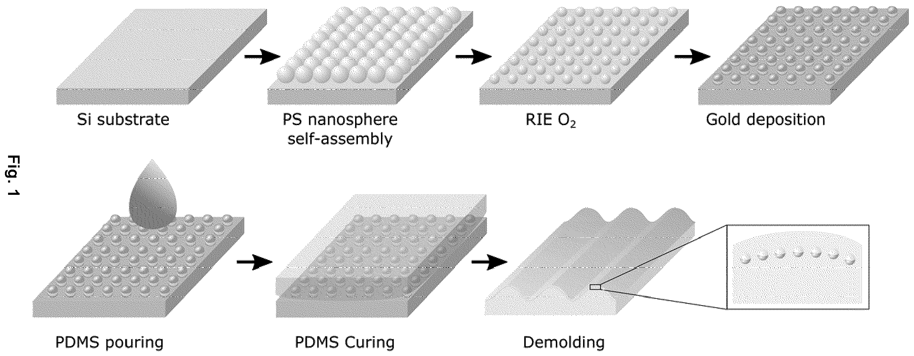

The process for the obtainment of the material of the present invention (Figure 1): Partially coated Au nanostructures, denoted as gold nanodomes are fabricated by colloidal self-assembly of polystyrene nanospheres (carboxyl terminated, diameter 200 nm) (Life Technologies) into hexagonal close-packed structure on a silicon substrate. To do the assembly, the close-packed monolayer of spheres is first formed at the air/water interface that is on the immersed silicon wafer. Once the monolayer is fully formed, the water is drained and the layer is deposited on the silicon substrate. After drying, the polystyrene nanospheres are isotropically etched by Reactive Ion Etching, by using oxygen gas (100W, 80 mTorr, 30 sccm, 30 sec), obtaining and ordered pattern of nanospheres of 160 nm of diameter. Then, a 40 nm gold film is deposited by Electron Beam Physical Vapour Deposition (UNIVEX 450, Leybold). 1 nm of titanium is deposited prior to the gold layer to ensure good adhesion between silicon and gold. Then, PDMS (*Sylgard 184*) is mixed at 10:1 ratio with the curing agent, degassed and poured onto the gold-coated silicon substrate. The PDMS is cured in an oven at a temperature of 100 °C for at least 20 minutes. Once the material is cooled to room temperature, the wrinkled-surface PDMS can be freed from the silicon substrate. The photothermal curing is done using an infrared laser at A = 1064 nm, and a lens (Thorlabs) to focus the spot to the sample. An irradiance of 6 $mW \cdot cm^{-2}$ was used to perform the experiment. The temperature measurement was performed using a thermographic IR camera (FLIR).

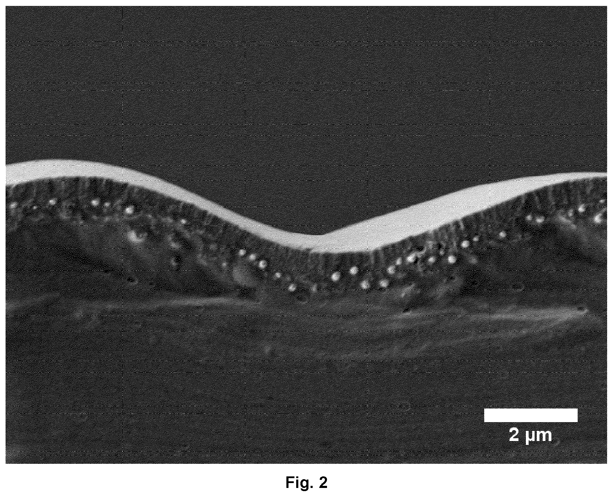

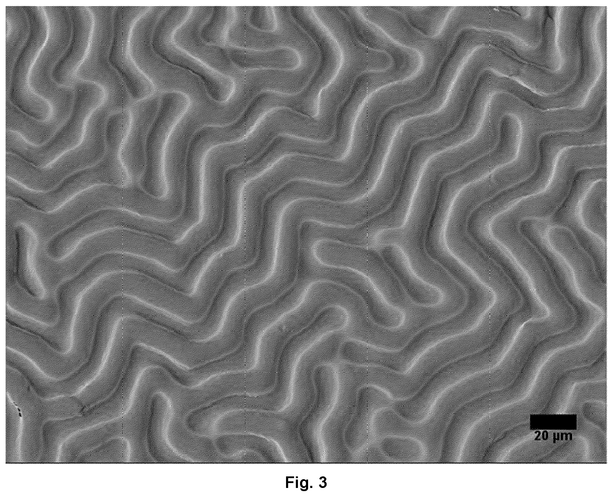

Two remarkable morphologic effects are observed: the disappearance of the Au nanodomes from the PDMS surface (Figure 2), and the spontaneous formation of large wrinkles at the same surface (Figure 3). The cross-section analysis of the cured PDMS films clearly revealed that the arrays of Au nanodomes were swallowed by the polymer matrix. For a curing temperature of 100 °C, the penetration depth was approximately 1 $\mu$m for all the nanodomes. The embedded nanodomes closely followed the wrinkles pattern, which exhibited an amplitude (A) and wavelength (A) of 1 $\mu$m and 16 $\mu$m, respectively (Figures 2 and 3).

## Example 2

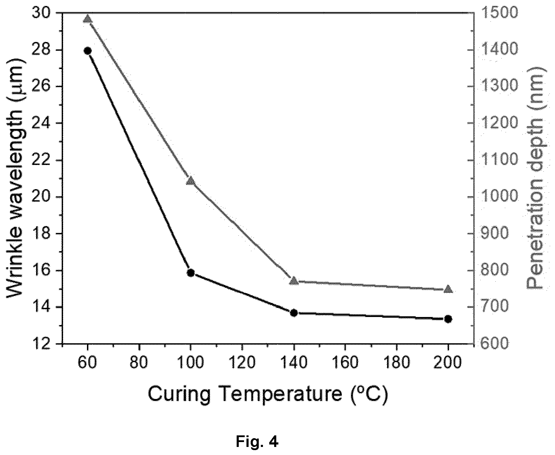

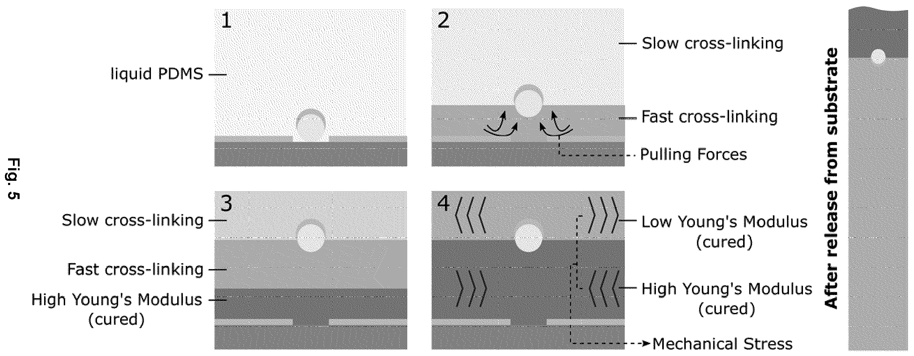

The dynamics during the curing process consist on: penetration of the Au nanodomes into the PDMS (Figure 2), and the spontaneous formation of large wrinkles at the surface initially in contact with the nanostructures (Figure 3). Both processes occur simultaneously and depend on the curing temperature (Figure 4), therefore, the self-swallowing of the Au nanodomes arrays and the spontaneous wrinkle formation were caused by the stress generated by the differential curing rate in the PDMS matrix, which was locally accelerated by the Au interfaces acting as polymerization catalysts. This was motivated by the fact that PDMS polymerization is based on a hydrosilylation reaction, which is catalyzed by transition metal complexes. Typical commercial curing agents include platinum complexes, but other transition metals (e.g., gold) can also behave as a catalyst and promote local cross-linking reactions. Therefore, the accelerated curing rate of the elastomer in contact to the Au interfaces produced a mechanical stress that was sufficiently strong to overcome the weak Van der Waals forces between the gold nanodomes and the elastomer, thereby swallowing the gold nanodomes inside the polymeric matrix. This enhanced curing reaction also generated a stiffer skin polymer layer, which was the responsible of forming the wrinkled pattern (Figure 5).

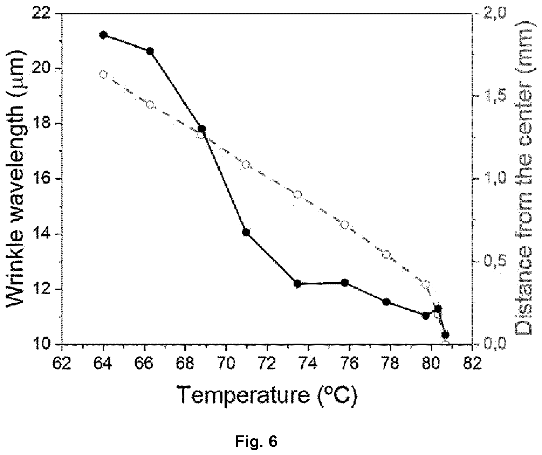

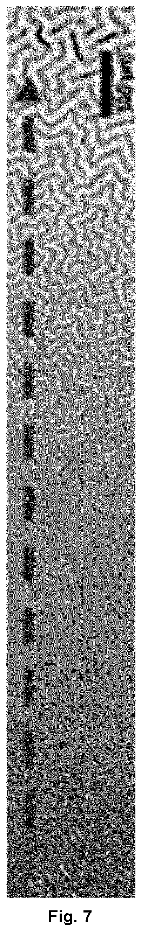

In addition, if the PDMS is cured by using a laser source, the nanostructures penetration depth and the wrinkle wavelength change as a function to the distance to the laser spot due to the gradient photothermal curing (Figure 6). A confocal microscopy image of the photothermally cured sample can be seen in figure 7, wherein a discontinuous arrow shows the inverse temperature gradient direction, wherein the wrinkles wavelength increases as the temperature decreases.

The wrinkles formation triggered by the local stiffening of the top PDMS layer is consistent with the linear buckling theory. If a hard skin layer in contact to a soft semi-infinite substrate is considered, the surface wrinkles are created when the residual strain overcomes a certain threshold value, $\varepsilon_c$, given by:

$$\varepsilon_c = \frac{1}{4}\left(\frac{3E_S}{E_L}\right)^{\frac{2}{3}} \quad (1)$$

where $E_L$ and $E_S$ are the Young's modulus of the skin layer and the substrate, respectively. If this condition is fulfilled, the wrinkles' amplitude (A) and wavelength (A) are governed by the following equations:

$$A = h_L\sqrt{\frac{\varepsilon - \varepsilon_c}{\varepsilon_c}} \quad (2)$$

$$\Lambda = 2\pi h_L\left(\frac{E_L}{3E_S}\right)^{\frac{1}{3}} \quad (3)$$

where $h_L$ is the thickness of the skin layer and $\varepsilon$ the generated strain. Therefore, the wrinkle dimensions depend on the Young's Modulus mismatch and the thickness of the hard skin layer. In the case of the Au enhanced cross-linking, the differential curing rates inside the PDMS provoked an increase of Young's Modulus in the thin layer in contact to the Au interfaces, which generated the stress responsible of the wrinkles formation. The correlation between nanodomes penetration depth and wrinkles wavelength showed a linear dependence, as expected from Eq. 3. These equations can also be used to estimate the Young's modulus of the hard PDMS skin layer. The substitution of the experimental values in Eq. 3, enabled obtaining a Young's modulus of $65 \pm 14$ MPa for the skin layer, which is consistent with the stiffening of the polymer matrix plus the contribution of the hard Au nanodomes.

In order to isolate the temperature dependence from other factors affecting the curing rate, we kept the area of the sample and the PDMS volume constant. As can be observed in Fig. 4, both nanodome penetration depth and wrinkle wavelength were sharply reduced as the curing temperature increased up to 140 °C, after which the reduction was much slower. The lower depth can be explained by the very rapid viscosity increase generated by the cross-linker in the whole PDMS matrix, which hampered the Au nanodomes penetration inside the polymer. Therefore, lower curing temperatures enable a longer penetration time before the polymer matrix is fully crosslinked and stops the process. Thus, both the nanodomes swallowing depth and the associated wrinkles dimensions (A, A) can be accurately controlled and tuned by the curing rate.

## Example 3

Counterexample for the demonstration of example 2.

The material is obtained following the example 1 exactly, but the PDMS is substituted by a photocurable epoxy silicone (i.e., using UV light, not temperature).

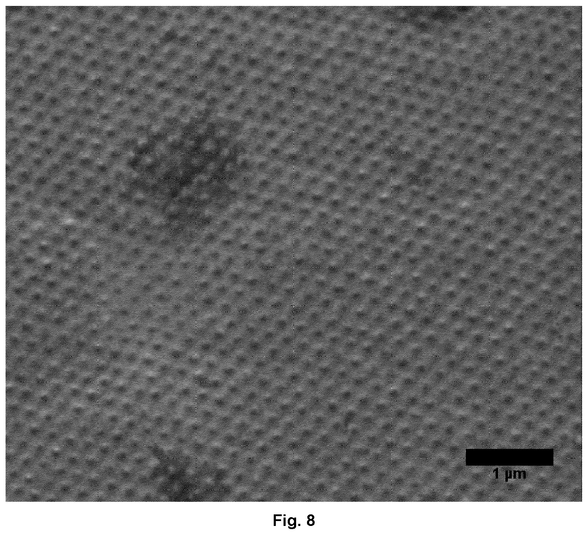

Since the polymerization reaction in this case was only driven by the ultraviolet light, the Au nanodomes stayed at the polymer surface and the wrinkles were not formed (Figure 8).

## Example 4

Counterexample for the demonstration of example 2.

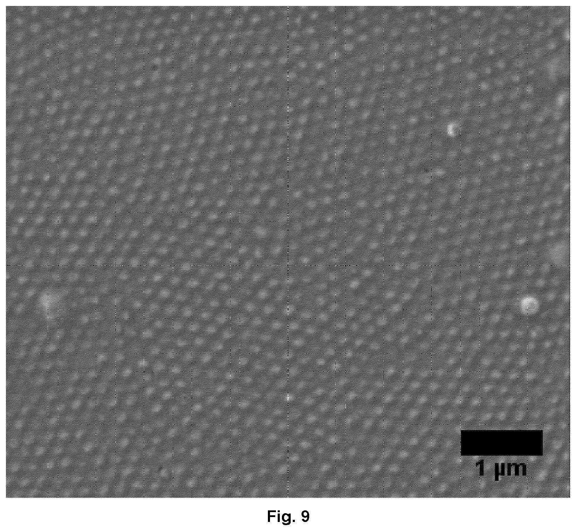

The material is obtained following the example 1 exactly, but the Au coating is substituted by Al, which is not a catalyst for the cross-linking reaction. In these conditions the PDMS was cured by the heating at homogeneous rate without generating local mechanical stress. As a result, the Al nanodomes also remained at the polymer surface (Figure 9) and the winkles were not formed.

## Example 5

Opto-mechanical response of the material obtained following the example 1 (100 °C), and varying the curing temperatures to 140 °C and 60 °C.

Using a fiber-couple halogen lamp coupled to a bifurcated optical fiber-bundle that transmitted the incident light to the sample and collected the reflected light, which was spectroscopically analyzed.

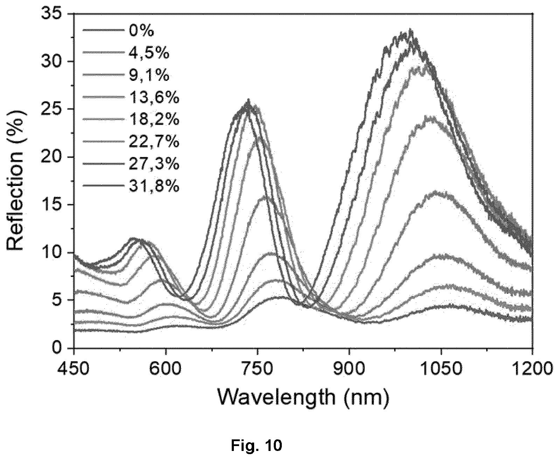

In the case of 140 °C curing temperature, the nanodomes penetration was ca. 0.7 $\mu$m and the reflection spectra presented three clear peaks, whose peaks positions and intensities experienced large color changes (blue-shifts) and intensity increases, respectively, as the film was stretched. (Fig. 10).

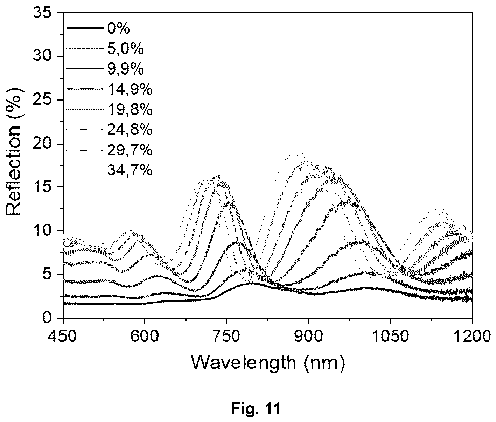

The curing material at 100 °C with a penetration depth of 1 $\mu$m (Fig. 11) gave rise four narrower reflection peaks that also showed blue-shifts under an increasing strain, although the intensity increase was slightly lower.

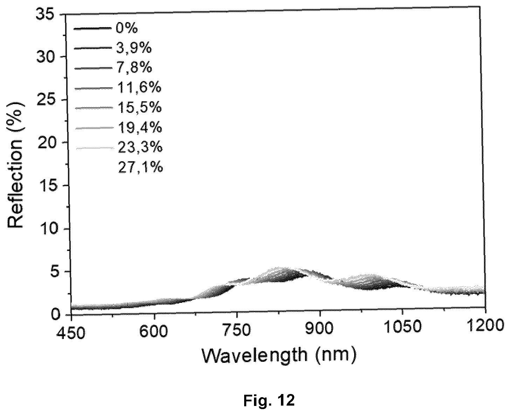

The material cured at 60 °C showing nanodomes penetration of 1.5 $\mu$m (Fig. 12) exhibited five reflection peaks that clearly blue-shifted, but whose amplitude remained low even at high strain. This sample exhibited the largest particle penetration and wrinkles amplitude and wavelength. However, the intensity of the reflection spectra did not change due to the strain. This can be attributed to the difficulty to achieve a homogeneous penetration during such a long travel distance (1.5 $\mu$m). These inhomogeneities reduced the FP-cavity efficiency and increased the nanodomes scattering, thereby yielding low reflection values even for the strained sample. This effect also highlights the homogeneous and highly controlled penetration of the Au nanoparticles arrays for penetrations up to 1 $\mu$m. However, larger particles could be employed to achieve homogeneous larger penetrations and resonances towards larger values and to keep intensity fluctuations.

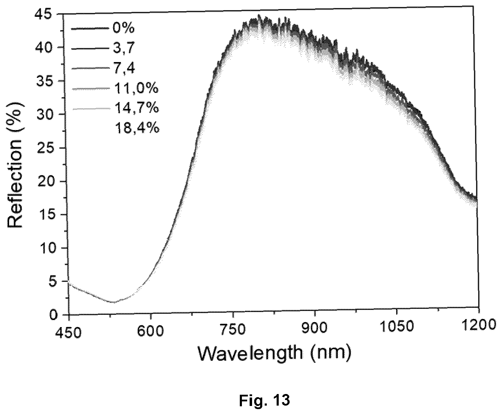

This opto-mechanical behavior is in stark contrast with the spectral response of the nanodomes arrays that were directly transferred to the surface of cured PDMS (Fig. 13). This sample showed a broad reflection peak from 650 nm to 1100 nm, whose peak position and intensity barely changed by the stretching.

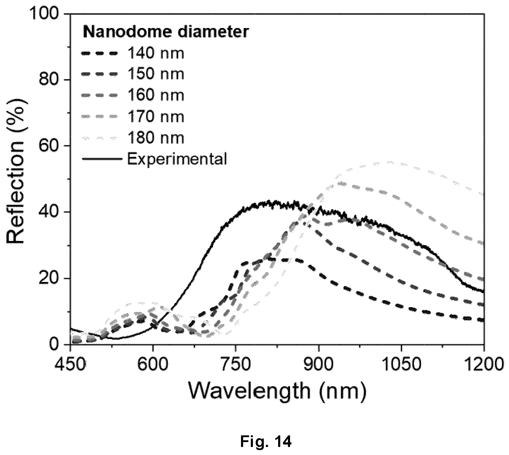

To understand the nature of these multiple peaks, both the controlled penetration depth of the Au nanodomes arrays and the wrinkled pattern should be considered. The nanodomes array behave as a plasmonic enhanced broadband highly reflective layer inside the PDMS matrix, thereby creating a Fabry-Perot (FP) cavity. In the FP cavity, the incoming light suffers multiple reflections leading to constructive and destructive interferences depending on its wavelength and the cavity length. Therefore, the reflected light presents peaks at the wavelengths that fulfill the cavity resonance conditions. However, the observed resonances were not equally intense in our experiment, being the peaks located at shorter wavelengths weaker. This is due to the coupling of the FP modes with the localized plasmon resonances (LSPR) of the Au nanodomes. As can be seen in figure 13, the reflectance of the Au nanodomes arrays on the surface was maximized in the 650 nm to 1100 nm range, and substantially decayed for lower wavelengths, thus reducing the efficiency of the FP cavity. This reflectance decrease is consistent with the Finite Difference Time Domain (FDTD) simulations of the Au arrays of nanodomes with dimeters spanning from 140 nm to 170 nm, i.e. in the same range of the observed experimental diameters ($d_{avg}$ = 160 $\pm$ 12 nm) (Figure 14). As a result, the plasmonic enhanced FP cavity effects were mainly observed in the 650 nm to 1100 nm range.

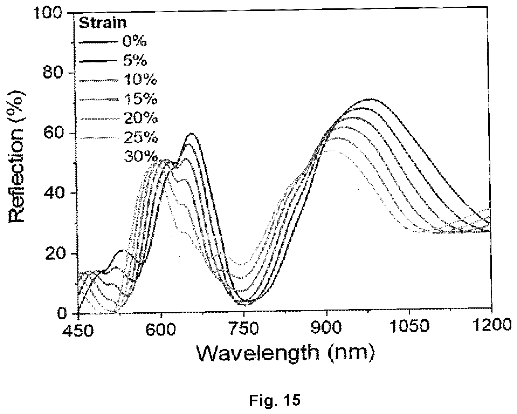

The FP cavity also explains the blue-shift of the multiple resonant peaks exhibited in Figures 10-12 induced by the film stretching. The strain parallel to the film yields a compression in the perpendicular directions that can be estimated by the Poisson ration of the material. As a result, the applied stress produces a reduction in the polymer cavity, thereby causing the blue-shift of the resonant peaks. This behavior is consisting with the FDTD simulations of the nanoplasmonic-FP cavity mimicking the mechanical strain (Fig. 15). We selected a nanodome array of 150 nm of diameter, having a penetration depth of 0.7 $\mu$m, to model the sample cured at 140 °C. We simulated the induced strains in the direction parallel to the film ranging from 0 to 30% by increasing the pitch of the nanodomes arrays in that direction, and we took into account the expected shortening in the perpendicular directions, given by the Poisson ratio of the PDMS. The simulations showed the multiple peaks arising from the FP-cavity/LSPR coupling together with the blue-shift for increasing strain, achieving a 78 nm shift at 30% strain for the peak initially located at 1050 nm, which agrees with the experimental results (76 nm blue-shift).

## Example 6

Quantification methodology of the spectral and intensity response as a non-contact strain sensor in comparison with the most relevant optical strain sensors reported in the literature [[Han, X., Liu, Y. & Yin, Y. Colorimetric Stress Memory Sensor Based on Disassembly of Gold Nanoparticle Chains. Nano Lett. 14, 2466-2470 (2014)], [Maurer, T. et al. The beginnings of plasmomechanics: towards plasmonic strain sensors. Front. Mater. Sci. 9, 170-177 (2015)], [Zhu, X., Shi, L., Liu, X., Zi, J. & Wang, Z. A mechanically tunable plasmonic structure composed of a monolayer array of metal-capped colloidal spheres on an elastomeric substrate. Nano Res. 3, 807-812 (2010)] and [Lütolf, F., Casari, D. & Gallinet, B. Low-Cost and Large-Area Strain Sensors Based on Plasmonic Fano Resonances. Adv. Opt. Mater. 4, 715-721 (2016)].

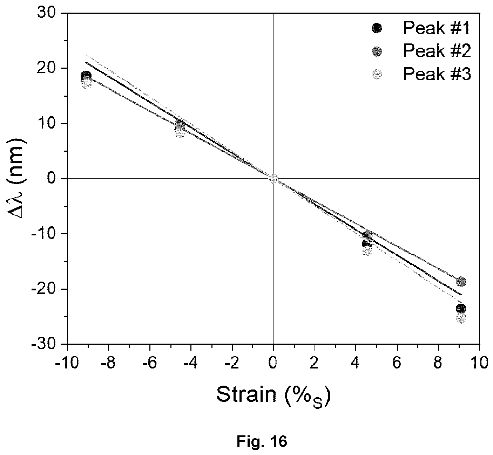

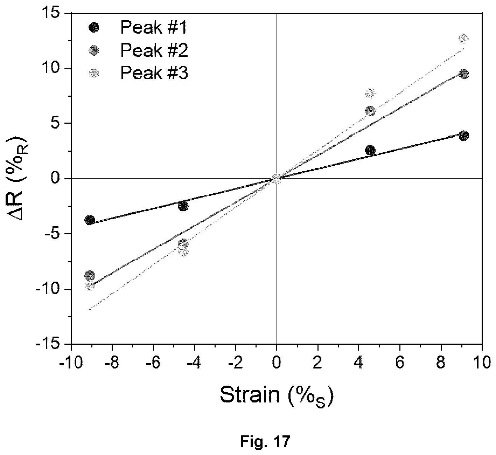

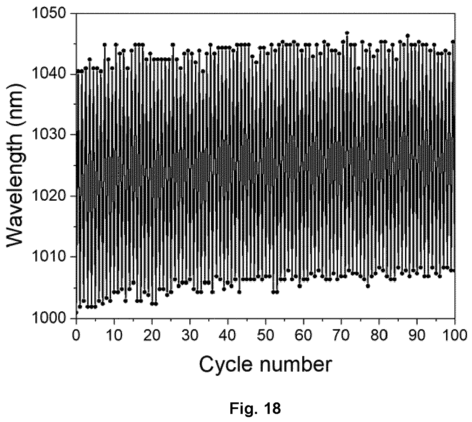

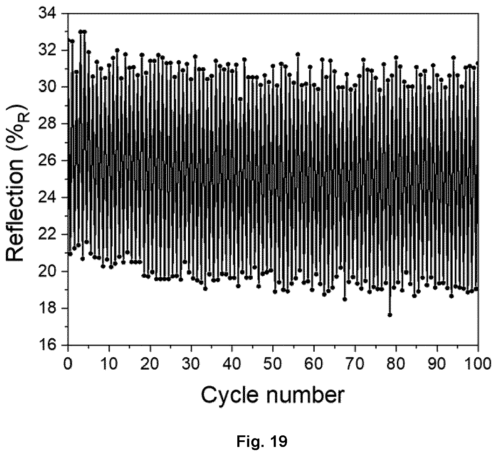

Measure based on the peak position displacement in both directions (spectral wavelength (Figure 16) and intensity (Figure 17)). In order to build a strain sensor that is able to measure both compression and stretching. A pre-strain has been applied to the material and this strain has been defined as the origin point (13.6% for this material). Subsequently, it can be measured the compressive and stretching forces, but also operate at the region with linear and most sensitive response. Analyzing the response of each peak, the largest sensitivity in intensity change (Figure 17) corresponds to the spectral wavelength around the nanoplasmonic resonance due to the amplification of the light reflection, while in wavelength shift the sensitivity is similar since the phenomenon is purely photonic. The spectral wavelength strain sensitivity of this material is competitive with the plasmonic strain sensors reported to date, which range between 0.7 and 3.5 nm·%$_S^{-1}$. However, not many materials are reported to detect strain in both spectral wavelength and reflectivity. In this material, the strain measurements can be also carried out by exploiting the intensity increase in the 650-1100 nm spectral wavelength range or even combining both responses. Furthermore, the multiple resonances along the visible and infrared spectrum allows the detection at the most convenient spectral wavelength in each particular scenario. Then, the robustness of the material was demonstrated by testing it to over 100 stretching-compression cycles. Its response did not show significant variations neither in spectral wavelength shift (Figure 18) or in reflectivity change (Figure 19), thereby demonstrating its long-term reliability as strain sensing material.

## Example 7

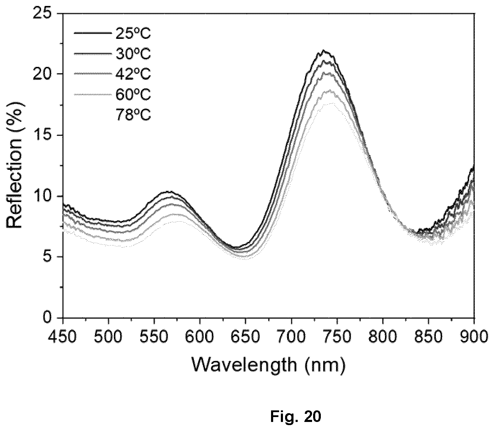

The photothermal capabilities of gold nanostructures can be exploited for photo-thermo-mechanical stimulation of the material. The efficient light absorption and conversion into heat by the gold nanodomes produces a thermal expansion of the material, which in turn modifies its optical properties (Figure 20). The demonstration that the photogenerated heat can be also used for actuation and detected by the material optical response opens the path for new strategies in temperature and light detection or even in combination with mechanical structures for new classes of soft robotics.

## Claims

1. Material with opto-mechanical behaviour **characterized in that** it comprises

   • a cured elastomeric polymer layer with a thickness of 0.1 to 10 mm, wherein said layer has a first and a second surfaces, wherein the second surface is opposite to the first surface;
   • a plurality of metallic, dielectric and/or dielectric-metal coated nanostructures, wherein said metallic nanostructures are embedded inside the cured elastomeric polymer at a depth of 0.3 $\mu$m to 3 $\mu$m from the first surface of the elastomeric polymer, wherein said nanostructures have a length of between 20 nm and 3000 nm and a thickness of between 1 nm and 1000 nm;

   wherein said first surface is corrugated forming wrinkles in the form of ridges and valleys, and wherein the ridges wavelength is between 1 μm and 30 μm and the height of the ridges is between 0.5 μm and 5 μm.

2. Material according to claim 1, wherein the cured elastomeric polymer layer is selected from polydimethylsiloxane, polybutylene adipate terephthalate and silicone-based polymers.

3. Material according to any of claims 1 to 2, wherein the metallic is selected from gold nanostructures, silver nanostructures, platinum nanostructures and transition metal; the dielectric is selected from silicon nanostructures and germanium structures; the dielectric cover with a gold film is selected from iron cover with a gold (Fe-Au) film, aluminium cover with a gold (Al-Au) film, nickel cover with a gold (Ni-Au) film nanostructures, cobalt cover with a gold (Co-Au) film nanostructures, germanium cover with gold (Ge-Au) film nanostructures, silicon cover with gold (Si-Au) film nanostructures and any combination thereof.

4. Material according to any claims 1 to 3, wherein the nanostructures are selected from nanoparticles, nanorods, nanodiscs, nanodomes, nanocylinders, nanowires, nanofibers, nanobelts, nanoribbons, nanosprings, nanocapsules, quantum dots, nanosheets, nanocomposites and nanotubes.

5. Material according to claim 4, wherein the nanostructures are nanodomes, and wherein said metallic, dielectric or dielectric-metal coated nanodomes are selected from gold nanodomes, silver nanodomes, platinum nanodomes, transition metal or dielectrics, cover with a gold film selected from iron cover with a gold (Fe-Au) film, aluminum cover with a gold (Al-Au) film, nickel cover with a gold (Ni-Au) film nanodomes, cobalt cover with a gold (Co-Au) film nanodomes, germanium cover with gold (Ge-Au) film nanodomes, silicon cover with gold (Si-Au) film nanodomes and any combination thereof.

6. Material according to claim 5, wherein the metallic nanodomes are gold nanodomes.

7. Material according to claim 5, wherein the plurality of gold nanodomes are embedded inside the cured elastomeric polymer at a depth of between 0.6 μm and 0.8 μm, and wherein the ridges wavelength is between 13 μm and 15 μm.

8. Process to obtain the material according to any of claims 1 to 7, **characterized in that** it comprises the following steps

  a) assembling of a metallic, dielectric or dielectric-metal coated nanostructures, on a solid support;
  b) pouring a mixture of an elastomeric material, preferably polydimethylsiloxane, polybutylene adipate terephthalate and silicone-based polymers, and a curing agent onto the metallic-coated substrate obtained in step (a), and curing the obtained layers at a temperature of between 40 and 200 °C at least for a time of between 1 min and 2 h;
  c) cooling the product obtained in step (b) at a temperature of between 15 °C and 30 °C and liberating the wrinkled-surface elastomeric layer with the embedded nanostructures from the solid substrate.

9. Process according to claim 8, the metal, dielectric or dielectric-metal of the nanostructures in step (a) is selected from gold, silver, platinum, iron covered with a gold (Fe-Au) film, aluminium covered with a gold (Al-Au) film, nickel covered with a gold (Ni-Au) film, cobalt covered with a gold (Co-Au) film, germanium covered with a gold (Ge-Au) film, silicon covered with a gold (Si-Au) film and any combination thereof.

10. Process according to any claims 8 to 9, wherein the elastomeric material is polydimethylsiloxane, and wherein the curing temperature of step (b) is between 130 °C and 150 °C, and preferably the external surface of the nanostructures in step (a) is gold and said nanostructure is a nanodome.

11. Process according to any claims 8 to 9, wherein the assembling of step (a) is a colloidal self-assembling of polystyrene (PS) nanospheres on a solid substrate, preferably silicon substrate, and followed by drying and a reactive ion etching following by depositing a film of titanium with a thickness of between 1 nm and 5 nm, preferably 1 nm, over the ordered pattern nanospheres obtained in step (a), and followed by depositing a metallic film over the titanium film with a thickness of between 1 nm and 200 nm, preferably 40 nm, and wherein the pouring of step (b) is a mixture between 5:1 and 20:1 of polydimethylsiloxane and a curing agent onto the metallic-coated silicon substrate obtained in step (a), and curing the obtained layers at a temperature of between 40 and 150 °C at least for a time of between 1 min and 2 h.

12. Use of the material according to any of claims 1 to 7 as active layer of a sensor.

13. Use of the material according to claims 12, wherein the sensor is a non-contact strain sensor, a non-contact thermometer, a non-contact sound detector or wherein the sensor is a biosensor Fabry-Perot device.

14. Use of the material according to any of claims 1 to 7 as a tuneable band-pass plasmonic waveguide filter or as part of a device to change light transmittance.

15. A device **characterized in that** it comprises an active layer of the material according to any of claims 1 to 7, wherein said device is

> • a sensor, wherein said sensor is a non-contact strain sensor or wherein said sensor is a biosensor Fabry-Perot device;
> • a tuneable band-pass plasmonic waveguide filter; or
> • a device to change light transmittance.

Fig. 1

Fig. 2

Fig. 3

Fig. 4

After release from substrate

1
liquid PDMS

2
Slow cross-linking
Fast cross-linking
Pulling Forces

3
Slow cross-linking
Fast cross-linking
High Young's Modulus (cured)

4
Low Young's Modulus (cured)
High Young's Modulus (cured)
Mechanical Stress

Fig. 5

Fig. 6

Fig. 7

Fig. 8

Fig. 9

Fig. 10

**Fig. 11**

Fig. 12

Fig. 13

Fig. 14

Fig. 15

Fig. 16

Fig. 17

Fig. 18

Fig. 19

Fig. 20

Europäisches
Patentamt

European
Patent Office

Office européen
des brevets

## EUROPEAN SEARCH REPORT

**Application Number**

EP 20 38 2913

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2008/028657 A1 (UNIV DUBLIN [IE]; ZERULLA DOMINIC [IE]; REHWALD STEPHANIE [DE]) 13 March 2008 (2008-03-13) * page 8, line 9 - page 10, line 18; figure 3 * ----- | 1-15 | INV. G02B1/00 B82Y20/00 B82Y40/00 C08K3/011 G02B5/00 |
| A | US 2017/121538 A1 (MESA JR GLENN A [US] ET AL) 4 May 2017 (2017-05-04) * paragraphs [0132] - [0133]; figure 3 * ----- | 1-15 | |
| A | EP 2 548 912 A1 (NIPPON STEEL CHEMICAL CO [JP]) 23 January 2013 (2013-01-23) * paragraphs [0032] - [0052]; figure 1 * ----- | 1-15 | |

**TECHNICAL FIELDS SEARCHED (IPC)**

G02B
B82Y
C08K

The present search report has been drawn up for all claims

| Place of search | Date of completion of the search | Examiner |
|---|---|---|
| Munich | 5 March 2021 | Stemmer, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 38 2913

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2021

| Patent document cited in search report | Publication date | Patent family member(s) | Publication date |
|---|---|---|---|
| WO 2008028657 A1 | 13-03-2008 | NONE | |
| US 2017121538 A1 | 04-05-2017 | US 2017121538 A1<br>US 2019352534 A1<br>WO 2017079274 A1 | 04-05-2017<br>21-11-2019<br>11-05-2017 |
| EP 2548912 A1 | 23-01-2013 | CN 102822249 A<br>EP 2548912 A1<br>JP 5627137 B2<br>JP WO2011114812 A1<br>KR 20130049767 A<br>TW 201200346 A<br>US 2013011616 A1<br>WO 2011114812 A1 | 12-12-2012<br>23-01-2013<br>19-11-2014<br>27-06-2013<br>14-05-2013<br>01-01-2012<br>10-01-2013<br>22-09-2011 |

EPO FORM P0459

For more details about this annex : see Official Journal of the European Patent Office, No. 12/82

# EP 3 988 970 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **HAN, X. ; LIU, Y. ; YIN, Y.** Colorimetric Stress Memory Sensor Based on Disassembly of Gold Nanoparticle Chains. *Nano Lett.,* 2014, vol. 14, 2466-2470
- **MAURER, T. et al.** The beginnings of plasmomechanics: towards plasmonic strain sensors. *Front. Mater. Sci.,* 2015, vol. 9, 170-177

- **ZHU, X. ; SHI, L. ; LIU, X. ; ZI, J. ; WANG, Z.** A mechanically tunable plasmonic structure composed of a monolayer array of metal-capped colloidal spheres on an elastomeric substrate. *Nano Res.,* 2010, vol. 3, 807-812
- **LÜTOLF, F. ; CASARI, D. ; GALLINET, B.** Low-Cost and Large-Area Strain Sensors Based on Plasmonic Fano Resonances. *Adv. Opt. Mater.,* 2016, vol. 4, 715-721